# EUROPÄISCHE PATENTSCHRIFT

(11) **EP 0 804 348 B1**
(45) Veröffentlichungstag und Bekanntmachung des Hinweises auf die Patenterteilung: **23.02.2000**
(21) Anmeldenummer: 96938844.6
(22) Anmeldetag: 21.11.1996
(51) Int. Cl.: B60K 15/04, B60K 15/035

(54) **VERSCHLUSSVORRICHTUNG FÜR EINEN FAHRZEUGTANK-EINFÜLLSTUTZEN**
CLOSURE DEVICE FOR A VEHICLE TANK FILLER PIPE
DISPOSITIF DE FERMETURE DU TUYAU DE REMPLISSAGE DU RESERVOIR D'ESSENCE D'UN VEHICULE

(30) Priorität: 21.11.1995 AT 189495
(43) Veröffentlichungstag der Anmeldung: 05.11.1997
(73) Patentinhaber: BLAU International Gesellschaft m.b.H., 8160 Preding (AT)
(72) Erfinder: PALVÖLGYI, Sandor, A-8200 Gleisdorf (AT)
(74) Vertreter: Weiser, Andreas, Dipl.-Ing.
(86) Internationale Anmeldenummer: AT9600231
(87) Internationale Veröffentlichungsnummer: WO9718966

(56) Entgegenhaltungen:
- EP-A- 0 464 420
- DE-A- 4 343 498

## Beschreibung

Die vorliegende Erfindung betrifft eine Verschlußvorrichtung gemäß dem Oberbegriff des Anspruchs 1. Eine derartige Vorrichtung ist aus der DE-A-43 43 498 bekannt.

Derzeit müssen Verschlußvorrichtungen für Fahrzeugtank-Einfüllstutzen mit zusätzlichen, gesonderten Fluidschaltungselementen kombiniert werden, um alle Funktionen und Betriebszustände eines Fahrzeugtanks abzudecken. Beispielsweise wird ein Unter- bzw. Überdruckventil benötigt, um den Fahrzeugtank zwecks Druckausgleichs zu Be- oder Entlüften. Verantwortungsbewußter Umgang mit der Umwelt und neuere gesetzliche Anforderungen haben zudem die Entwicklung sogenannter ORVR-Systeme vorangetrieben (Onboard Refuelling Vapor Recovery Systems), mit welchen die beim Betanken auftretenden Kraftstoffdämpfe - unabhängig von einer allfälligen Absaugung über die Gaspendelleitung der Zapfsäule - sowie die im Fahrbetrieb über das Überdruckventil entweichenden Dämpfe am Fahrzeug ("on board") in einem mit einem Aktivkohlefilter ausgestatteten Auffangbehälter aufgefangen werden. Der Auffangbehälter wird im Fahrbetrieb von den Verbrennungszufuhrgasen durchspült, welche die Kraftstoffrückstände aus dem Aktivkohlefilter herauslösen und der Verbrennung zuführen. Es sind daher weitere Ventile erforderlich, welche beim Betanken entsprechende Absaug- bzw. Auffangöffnungen und im Fahrbetrieb entsprechende Druckausgleichsöffnungen freigeben.

Neueste Vorschriften verlangen überdies einen vollkommen drucklosen Betrieb des Fahrzeugtanks, um die Emission von Kraftstoffdämpfen noch weiter zu reduzieren. Die bisher verwendeten Über- und Unterdruckventile für die Druckausgleichsverbindung zum Auffangbehälter können daher nicht mehr verwendet werden und müssen durch gesonderte Schaltventile ersetzt werden, welche die Druckausgleichsverbindung im Fahrbetrieb freigeben.

Der bereits weitverbreitete Einsatz eines sogenannten Überfüllventiles, welches ein Überfüllen des Tankes bis in den Einfüllstutzen hinein verhindert, erhöht die Anzahl der Fluidschaltungselemente noch weiter. Ein von der Klappe betätigtes Überfüllventil ist z.B. aus der EP-A-0 464 420 bekannt.

Die Erfindung setzt sich zum Ziel, eine Verschlußvorrichtung der einleitend genannten Art so weiterzubilden, daß sie alle für die Funktionsweise eines Fahrzeugtanks erforderlichen Fluidschaltungselemente enthält. Dieses Ziel wird erfindungsgemäß dadurch erreicht, daß das Mehrwegeventil in einer anderen Stellung den Einfüllstutzen unterhalb der Klappe mit einer weiteren, zum Auffangbehälter führenden Auffangleitung größeren Strömungsquerschnittes verbindet, daß die Klappe zusätzlich mit Hilfe einer Anpreßeinrichtung in Schließrichtung belastbar ist, und daß die Betätigungseinrichtung das Mehrwegeventil in der Belastungsstellung der Klappe in die genannte eine Stellung steuert, hingegen in der Entlastungsstellung der Klappe in die genannte andere Stellung steuer.

Die erfindungsgemäße Verschlußvorrichtung vereint die Funktionen eines Einfüllstutzenverschlusses, eines ORVR-Ventiles und eines Druckausgleichventiles, die gemeinsam mit der Freigabe bzw. dem Verschließen der Klappe gesteuert werden, welche aufgrund der Anpreßeinrichtung selbst als dichter Stutzenverschluß dient.

Gemäß einer besonders bevorzugten Ausführungsform der Erfindung wird vorgesehen, daß das Mehrwegeventil in der genannten einen Stellung den Einfüllstutzen unterhalb der Klappe mit einer von einem Gasauffangraum des Fahrzeugtankes ausgehenden Überfülleitung verbindet. Dadurch wird auch die Funktion eines Überfüllventiles integriert.

Eine weitere vorteilhafte Ausführungsform der Erfindung zeichnet sich dadurch aus, daß das Mehrwegeventil ein kombiniertes Dreh- und Planschieberventil ist, wobei die genannte weitere Auffangleitung am Umfang, hingegen die Druckausgleichsleitung, die genannte eine Auffangleitung und gegebenenfalls die Überfülleitung in der Stirnplatte einer den Dreh- und Planschieber lagernden, zum Einfüllstutzen hin offenen Buchse münden. Diese Konstruktion berücksichtigt den Platzbedarf der Steueröffnung der großdurchmeßrigen ersten Auffangleitung, welche die beim Tanken anfallenden Kraftstoffdämpfe ableiten muß.

Besonders vorteilhaft ist dabei, wenn bei einer Verschlußvorrichtung, bei welcher die Betätigungseinrichtung einen am Anpreßfinger angreifenden Nocken aufweist, der Nocken auf der Betätigungswelle des Dreh- und Planschiebers sitzt, was eine kompakte Anordnung ergibt.

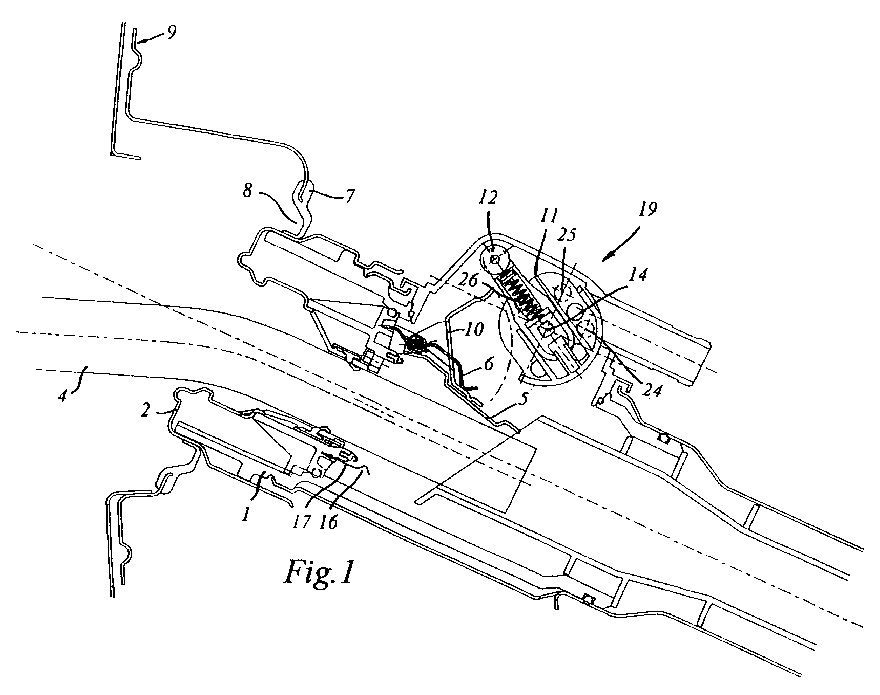

Die Erfindung wird nachstehend an Hand eines in den Zeichnungen dargestellten Ausführungsbeispieles näher erläutert. In den Zeichnungen zeigen die
Fig. 1 bis 3 die Verschlußvorrichtung im Längsschnitt während des Tankvorganges, am Ende des Tankvorganges und im Fahrbetrieb.

In den Fig. 1 bis 3 ist das obere Ende eines Einfüllstutzens 1 gezeigt, dessen (nicht dargestelltes) unteres Ende zu einem Fahrzeug-Kraftstofftank führt. In das obere Ende des Einfüllstutzens 1 ist ein etwa topfförmiger Einsatz 2 dicht eingesetzt, welcher an seinem unteren Ende eine Öffnung 3 verringerten Durchmessers für den Durchtritt des Füllrohres 4 einer (nicht weiter dargestellten) Zapfpistole aufweist. Die Öffnung 3 ist mit Hilfe einer einseitig angelenkten Klappe 5 verschließbar, welche durch eine Feder 6 gegen den unterseitigen Rand der Öffnung vorgespannt ist.

Das obere Ende des Einfüllstutzens 1 mitsamt dem Einsatz 2 durchsetzt unter Zwischenschaltung einer Dichtmanschette 7 eine Öffnung 8 in einem zurückgesetzten Bereich einer Fahrzeugkarosserie 9. Der zurückgesetzte Bereich kann durch eine entsprechende (nicht dargestellte) Karosserieklappe abgedeckt werden.

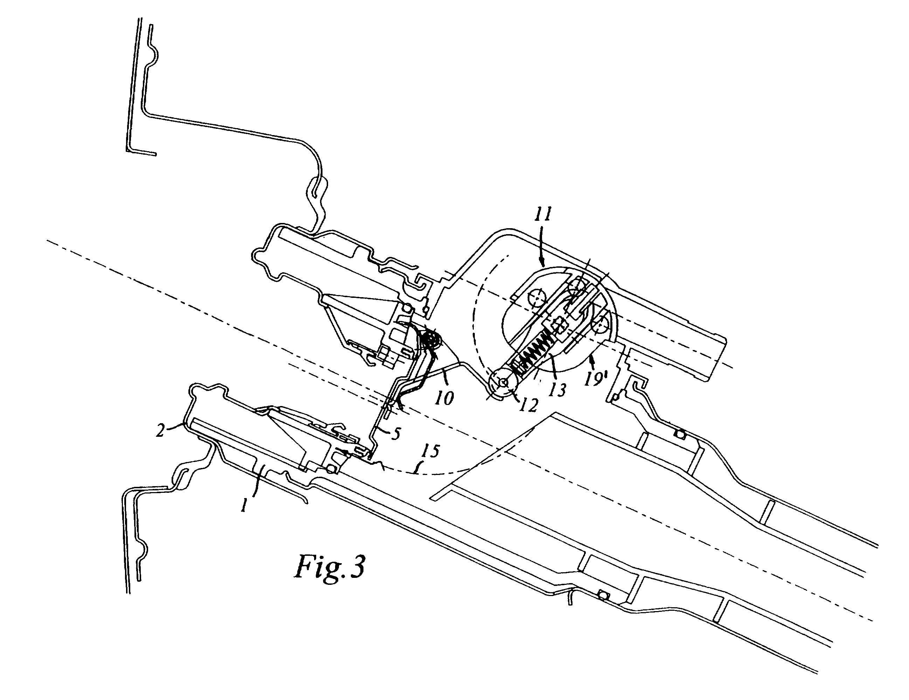

Zum dichten Verschließen der Öffnung 3 im Fahrbetrieb ist neben der Klappe 5 ein Anpreßfinger 10 angelenkt, welcher mit Hilfe einer Betätigungseinrichtung 11 gegen die Unterseite der Klappe 5 beaufschlagbar ist (siehe Fig. 3). Der Anpreßfinger 10 ist bei dem gezeigten Beispiel ein zweiarmiger Hebel, und die Betätigungseinrichtung 11 umfaßt einen verschwenkbaren, an seinem Ende mit einer federbelasteten Andruckrolle 12 versehenen Nocken 13, welcher auf den einen Hebelarm des Anpreßfingers 10 drückt und dessen anderen Hebelarm gegen die Unterseite der Klappe 5 preßt (Fig. 3). Anstelle der gezeigten Anpreßfinger- und Betätigungseinrichtungskonstruktion ist auch jede andere Form von Anpreßeinrichtung für die Klappe 5 möglich.

Das Verschwenken des Nockens 13 erfolgt über eine Welle 14, die von einem geeigneten, z.B. elektrischen, hydraulischen oder pneumatischen (nicht dargestellten) Servomotor angetrieben wird. Auch eine Handbetätigung ist möglich.

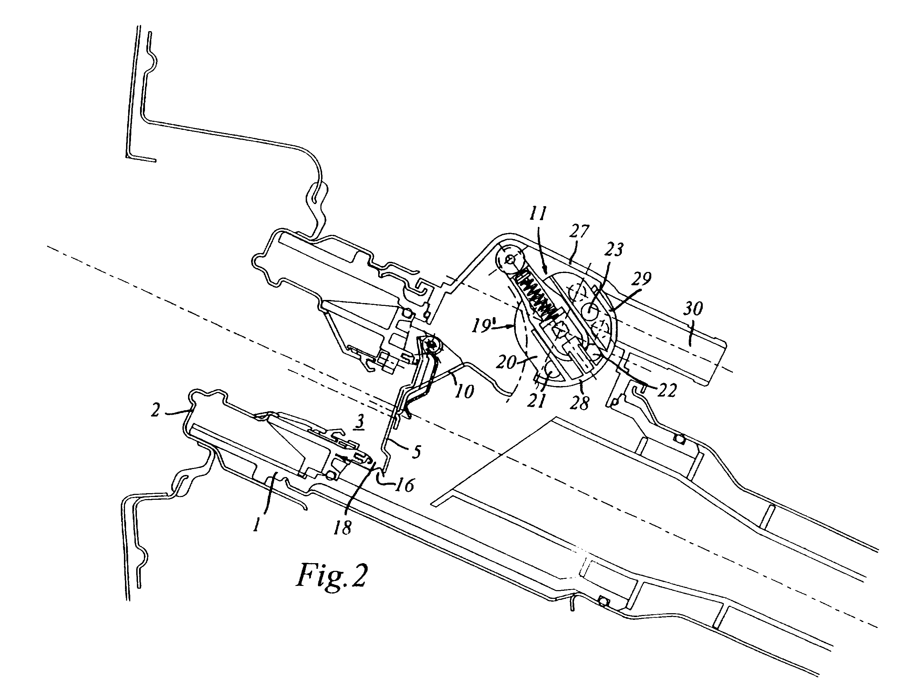

Um einen allfälligen, nach dem Abziehen des Füllrohres 4 oberhalb der Klappe 5 verbleibenden Kraftstoffüberschuß in den Tank abfließen zu lassen, ragt in die Bewegungsbahn 15 der Klappe 5 im Bereich vor ihrer Schließstellung ein Rastvorsprung 16. Der Rastvorsprung 16 wird durch eine radial einwärts gerichtete Riefe in einer Federzunge 17 gebildet, die am Rand der Öffnung 3 in Axialrichtung eingespannt ist. Durch das Einführen des Füllrohres 4 (Fig. 1) wird die Klappe 5 an dem Rastvorsprung 16 vorbeigedrückt, wobei die Federzunge 17 elastisch ausweicht. Beim Abziehen des Füllrohres 4 nach beendetem Tankvorgang, wenn der Anpreßfinger 10 noch nicht betätigt ist (Fig. 2), liegt die Klappe 5 vor dem Erreichen ihrer Schließstellung am Rastvorsprung 16 auf, so daß ein kleiner Spalt 18 für den Ablauf des Restkraftstoffes verbleibt.

Die Verschlußvorrichtung vereint alle für den Aufbau eines ORVR-Systems erforderlichen Fluidschaltungselemente und noch einige weitere, im Zusammenhang mit Fahrzeugtanks notwendige Elemente, wie im nachstehenden ausführlicher erläutert wird. Die Antriebswelle 14 der Betätigungseinrichtung 11 ist bei dem gezeigten Beispiel die Steuerwelle eines 5/2-Wegeventiles 19, welches einen kombinierten Dreh- und Planschieber 19' enthält. Der Dreh- und Planschieber 19' weist eine Steuerplatte 20 auf, die mit zentrisch um die Welle 14 herum angeordneten Steuerbohrungen 21 bis 23 versehen ist, welche mit Anschlußbohrungen 24 bis 26 in einer feststehenden, an der Steuerplatte 20 anliegenden (nicht gezeigten) Stirnplatte in Ausrichtung gebracht werden können. Die Stirnplatte ist Teil einer den Dreh- und Planschieber 19' lagernden, zum Einfüllstutzeninneren hin offenen Buchse 27, welche in der Wandung des Einfüllstutzens 1 ausgeformt ist.

Am Umfang der Steuerplatte 20 ragt eine halbzylindermantelförmige Schürze 28 hoch, in der eine radiale Steueröffnung 29 ausgespart ist, welche mit einer Anschlußöffnung 30 am Umfang der Buchse 27 ausgerichtet werden kann.

Die Steuerbohrungen 21 bis 23 und die Steueröffnung 29 des Dreh- und Planschiebers 19' sind bezüglich der Anschlußbohrungen 24 bis 26 und der Anschlußöffnung 30 so angeordnet, daß in der in den Fig. 1 und 2 gezeigten Entlastungsstellung der Klappe 5 die Anschlußbohrungen 24 bis 26 verschlossen und die Anschlußöffnung 30 mit dem Einfüllstutzeninneren verbunden ist, wogegen in der in Fig. 3 gezeigten Belastungsstellung der Klappe 5 die Anschlußbohrungen 24 bis 26 mit dem Einfüllstutzeninneren verbunden sind und die Anschlußöffnung 30 verschlossen ist.

Die Belegung der Anschlußbohrungen 24 bis 26 und der Anschlußöffnung 30 ist wie folgt. An die Anschlußöffnung 30 ist eine Auffangleitung für Kraftstoffdämpfe angeschlossen, welche zu einem (nicht dargestellten) Kraftstoffdampf-Auffangbehälter führt, der mit einem Aktivkohlefilter zur Absorption der Kraftstoffdämpfe ausgestattet ist. Der Auffangbehälter wird während des Betriebes des Fahrzeuges von Verbrennungszufuhrgasen durchspült, welche die Kraftstoffrückstände aus dem Aktivkohlefilter herauslösen und der Verbrennung zuführen. Die Komponenten und die Funktionsweise dieses Systems sind dem Fachmann bekannt. Die Anschlußöffnung 30 und die anschließende Auffangleitung haben ausreichend großen Strömungsquerschnitt, um die während des Tankens (Fig. 1) anfallende Kraftstoffdampfmenge abführen zu können.

Für den Fahrbetrieb (Fig. 3) wird dieser großdurchmeßrige Verbindungsweg verschlossen und ein Verbindungweg mit kleinerem Strömungsquerschnitt errichtet. Zu diesem Zweck ist die Anschlußbohrung 24 mit einer zweiten zum Auffangbehälter führenden Auffangleitung kleineren Strömungsquerschnittes verbunden. In die zweite Auffangleitung ist ein Überrollventil eingeschaltet. Das Überrollventil schließt schwerkraftgesteuert bei einem Fahrzeugüberschlag und verhindert ein Austreten des Kraftstoffes über die Kraftstoffdampf-Auffangleitung und den Auffangbehälter.

Die weiteren Anschlußbohrungen 25 und 26 dienen für den Anschluß einer von der Oberseite des Fahrzeugtanks ausgehenden Druckausgleichsleitung sowie einer von einem Gasauffangraum an der Oberseite des Fahrzeugtankes ausgehenden Überfülleitung. Die Druckausgleichsleitung (Anschlußbohrung 25) ist im Fahrbetrieb (Fig. 3) über das Einfüllstutzeninnere und die zweite Auffangleitung mit dem Kraftstoffdampf-Auffangbehälter verbunden. Die Funktion der Überfülleitung (Anschlußbohrung 26) ist dem Fachmann bekannt; sie ist während des Tankvorganges geschlossen und erlaubt den Aufbau eines Luftvorrates im Gasauffangraum des Fahrzeugtankes. Nach Beendigung des Tankvorganges wird der Luftvorrat in das obere Ende des Einfüllstutzens entlüftet, so daß Kraftstoff im Einfüllstutzen in den Tank rinnt.

Selbstverständlich lassen sich die beschriebenen Ventilfunktionen nicht nur mit Hilfe des dargestellten Dreh- und Planschieberventiles erzielen, vielmehr kann jedes beliebige, in der Technik bekannte Mehrwegeventil eingesetzt werden. Die Erfindung eignet sich auch für Anwendungsfälle, in denen auf eine Überfülleitung verzichtet wird, in welchem Fall ein entsprechend reduziertes Mehrwegeventil eingesetzt wird. Die Anschlußbohrungen für die Druckausgleichsleitung (25) und die zweite Auffangleitung (24) könnten im Fahrbetrieb auch direkt, d.h. ohne Zwischenverbindung über das Einfüllstutzeninnere, miteinander verbunden werden.

## Patentansprüche

1. Verschlußvorrichtung für einen Fahrzeugtank-Einfüllstutzen (1), der eine mit einer Klappe (5) versehene Öffnung (3) für den Durchtritt des Füllrohres (4) einer Zapfpistole aufweist, wobei die Klappe (5) durch eine Feder (6) gegen den unterseitigen Rand der Öffnung (3) vorgespannt ist, und mit einem Mehrwegeventil (19), welches in einer Stellung eine am Fahrzeugtank angeschlossene Druckausgleichsleitung (25) mit einer zu einem Kraftstoffdampf-Auffangbehälter führenden, mit einem Überrollventil ausgestatteten Auffangleitung (24) verbindet, dadurch gekennzeichnet, daß das Mehrwegeventil (19) in einer anderen Stellung den Einfüllstutzen (1) unterhalb der Klappe (5) mit einer weiteren, zum Auffangbehälter führenden Auffangleitung (30) größeren Strömungsquerschnittes verbindet, daß die Klappe (5) zusätzlich mit Hilfe einer Anpreßeinrichtung (10, 11) in Schließrichtung belastbar ist, und daß die Anpreßeinrichtung (10, 11) das Mehrwegeventil (19) in der Belastungsstellung der Klappe (5) in die genannte eine Stellung steuert, hingegen in der Entlastungsstellung der Klappe (5) in die genannte andere Stellung steuert.

2. Verschlußvorrichtung nach Anspruch 1, dadurch gekennzeichnet, daß das Mehrwegeventil (19) in der genannten einen Stellung den Einfüllstutzen (1) unterhalb der Klappe (5) mit einer von einem Gasauffangraum des Fahrzeugtankes ausgehenden Überfülleitung (26) verbindet.

3. Verschlußvorrichtung nach Anspruch 1 oder 2, dadurch gekennzeichnet, daß das Mehrwegeventil (19) ein kombiniertes Dreh- und Planschieberventil ist, wobei die genannte weitere Auffangleitung (30) am Umfang, hingegen die Druckausgleichsleitung (25), die genannte eine Auffangleitung (24) und gegebenenfalls die Überfülleitung (26) in der Stirnplatte einer den Dreh- und Planschieber (19') des Ventiles lagernden, zum Einfüllstutzen (1) hin offenen Buchse (27) münden.

4. Verschlußvorrichtung nach Anspruch 3, bei welcher die Anpreßeinrichtung (11) einen an einem Anpreßfinger angreifenden Nokken (13) aufweist, dadurch gekennzeichnet, daß der Nocken (13) auf der Betätigungswelle (14) des Dreh- und Planschiebers (19') befestigt ist.

## Claims

1. Closure device for the filler neck (1) of a vehicle fuel tank, comprising an opening (3) for the passage of the filling hose (4) of a fuel pump nozzle, provided with a flap (5) which is pretensioned against the underside edge of the opening (3) by means of a spring (6), and a multiway valve (19) which, in a first position, connects a pressure-compensating line (25) connected to the vehicle fuel tank to a receiving line (24) leading to a fuel vapour receiver and provided with a roll-over valve, characterised in that, in a second position, the multiway valve (19) connects the filler neck (1) below the flap (5) to another receiving line (30) with a larger flow cross section leading to the receiver, that the flap (5) can additionally be loaded in the closing direction with the aid of a pressure means (10, 11) and that the pressure means (10, 11) directs the multiway valve (19) into the said first position in the loading position of the flap (5) and, on the other hand, into the said second position in the relief position of the flap (5).

2. Closure device according to claim 1, characterised in that the multiway valve (19) connects the filler neck (1) below the flap (5) to an overfill line (26) departing from a gas-receiving space in the vehicle fuel tank in the said first position.

3. Closure device according to claim 1 or claim 2, characterised in that the multiway valve (19) is a combined rotary slide and cross-slide valve, the said further receiving line (30) on the circumference and, on the other hand, the pressure-compensating line (25), the said first receiving line (24) and possibly the overfill line (26) opening into the end plate of a bushing (27) supporting the rotary and cross slide (19') of the valve and open towards the filler neck (1).

4. Closure device according to claim 3, in which the pressure means (11) has a cam (13) engaging a pressure finger, characterised in that the cam (13) is secured to the actuating shaft (14) of the rotary and cross slide (19').

## Revendications

1. Dispositif de fermeture pour une tubulure (1) de remplissage d'un réservoir d'automobile, qui comporte une ouverture (3) pourvue d'un clapet (5) permettant le passage du tube de remplissage (4) d'un pistolet de remplissage, le clapet (5) étant précontraint par un ressort (6) contre le bord inférieur de l'ouverture (3), et comportant une soupape à plusieurs voies (19) qui, dans une position, relie une canalisation de compensation de pression (25) raccordée au réservoir du véhicule, à une canalisation de collecte(24) qui est reliée au récipient de collecte de la vapeur de carburant et est équipée d'une soupape à retournement, caractérisé en ce que dans une autre position, la soupape à plusieurs voies (19) relie la tubulure de remplissage (1) au-dessus du clapet (5) à une autre canalisation de collecte (30) qui aboutit au récipient de collecte et possède une section transversale d'écoulement plus étendue, que le clapet (5) peut être en outre chargé dans le sens de la fermeture à l'aide d'un dispositif de serrage (10,11), et que, lorsque le clapet (5) est dans la position de charge, le dispositif de serrage (10,11) place la soupape à plusieurs voies (19) dans ladite une position, alors que lorsque le clapet (5) est dans la position de détente, le dispositif de serrage place la soupape à voies multiples dans l'autre position indiquée.

2. Dispositif de fermeture selon la revendication 1, caractérisé en ce que dans ladite une position, la soupape à voies multiples (19) relie la tubulure de remplissage (1) au-dessous du clapet (5) à une canalisation de trop-plein (26) qui sort d'un espace de collecte de gaz du réservoir du véhicule.

3. Dispositif de fermeture selon la revendication 1 ou 2, caractérisé en ce que la soupape à plusieurs voies (19) est une soupape combiné à tiroir rotatif et plat, ladite autre canalisation de collecte (30) débouchant au niveau de la périphérie, tandis que la canalisation (25), ladite une canalisation de collecte (24) et éventuellement la canalisation de trop-plein (26) débouchent dans la plaque frontale d'un manchon (27) qui supporte le tiroir rotatif et plat (19') de la soupape et qui est ouvert en direction de la tubulure de remplissage (1).

4. Dispositif de fermeture selon la revendication 3, dans lequel le dispositif de serrage (11) comporte une came (13), qui attaque un doigt de serrage, caractérisé en ce que la came (13) est fixée sur l'arbre d'actionnement (14) du tiroir rotatif et plat (19').
